# EUROPEAN PATENT APPLICATION

(11) **EP 3 669 658 A1**
(43) Date of publication of application: **24.06.2020**
(21) Application number: 18215586.1
(22) Date of filing: 21.12.2018
(51) Int. Cl.: A22C 17/00, B02C 18/30

(54) **A FOOD PROCESSING DEVICE, A KNIFE SET FOR A FOOD PROCESSING DEVICE, AND A METHOD OF SHARPENING A KNIFE FOR A FOOD PROCESSING DEVICE**

(71) Applicant: Marel Salmon A/S, 9530 Støvring (DK); Marel Iceland EHF, 210 Gardabaer (IS)
(72) Inventor: LIND, Christian Brøchner, 9270 Klarup (DK); Einarsson, August Örn, 104 Reykjavik (IS)
(74) Representative: Inspicos P/S

(57) **Abstract**

A food processing device comprising a flow passage extending in an axial direction from an inlet to an outlet, a feeder arranged in the flow passage and configured to transport food in the axial direction through the passage, a knife arranged in the passage between the outlet and the feeder and configured to cut food in the passage, the knife comprising a hub and a plurality of blades, the hub being suspended for rotation about a rotation axis which extends in the axial direction, and each blade being attached to the blade at a point of attachment at the hub and extending radially from the attachment portion to a tip portion. Each blade forms an upstream axial surface facing upstream in the axial direction, a downstream axial surface facing downstream in the axial direction, and an intermediate surface extending between the upstream axial surface and the downstream axial surface, where the intermediate surface forms a sharpened edge. To allow repeated sharpening without influencing tolerances between the knife and other components, the sharpened edge is configured to be sharpened by grinding of the intermediate surface.

## Description

### INTRODUCTION

The present disclosure relates to a food processing device comprising a feeding structure arranged to feed food objects in a downstream direction from an inlet to an outlet of a flow path, and a knife configured to cut the food object in the flow path.

### BACKGROUND

Food grinders such as meat grinders are frequently used in processing plants for chopping or mincing meat and similar food objects.

In traditional meat grinders, the meat is transported by a feeder to a cutting appliance. The cutting appliance is often constituted by one of more rotating knives arranged directly against a metal plate with a plurality of small holes, referred to as a hole-plate.

The rotating knifes need frequent sharpening.

The meat is added to a chute, and a feeder feeds the meat to the knife. The feeder provides a continuous pressure towards the hole-plate. Due to the rotation of the knife directly against the hole-plate, the meat is finely minced while it is conveyed through the holes of the hole-plate. This provides a smooth and fine product with a homogenous character. Sometimes, the hole-plate is exchangeable such that the mincing quality can be varied by use of different hole-plates with different hole sizes. The knife rotates directly against the surface of the hole-plate.

While the combination between a rotating knife and a hole-plate ensures a fine mincing of the meat, the contact between the hole-plate and the knife increases wear and reduces the life time of the rotating knife. Further, the necessary contact between the hole-plate and the knife necessitates fine tolerances of the dimensions of the knife and hole-plate in the flow direction of the food objects.

### SUMMARY

It is an object of embodiments of this disclosure to improve food grinding, particularly with respect to reducing the need for replacing the knife of a grinder.

According to these and other objects, the present disclosure provides a food processing device, a knife for a food processing device, and a method for sharpening the knife.

The food processing device according to the present disclosure comprises a flow passage extending in an axial direction from an inlet to an outlet, a feeder arranged in the flow passage and configured to transport food in the axial direction through the passage, and a knife arranged in the passage between the outlet and the feeder and configured to cut food in the flow passage.

The knife comprises a hub and a plurality of blades extending from the hub.

The hub is suspended for rotation in a direction of rotation about a rotation axis which extends in the axial direction.

Each blade forms an upstream axial surface facing upstream in the axial direction, a downstream axial surface facing downstream in the axial direction, and an intermediate surface extending between the upstream axial surface and the downstream axial surface, where the intermediate surface forms a sharpened edge, and where the sharpened edge is configured to be sharpened by grinding of the intermediate surface.

Preferably, the sharpening edge is at a tip point between the upstream axial surface and the intermediate surface and is thus facing in the upstream direction.

The upstream axial surface and the downstream axial surface may particularly not be grinded such that the sharpening of the sharpened edge essentially leaves the axial surfaces unchanged.

The flow path contains a feeder and a knife. These two elements are located axially displaced in the flow path. Additionally, the device may comprise other components located in the flow path, e.g. for fixing the knife in a particular position in the flow path, or the device may comprise a hole-plate for obtaining fine mincing of the food.

Since the sharpened edge is sharpened by grinding the intermediate surface, sharpening has little or no influence on the dimension of the knife in the axial direction. Accordingly, sharpening has little or no influence on the interaction between knife and other components in the flow path. The knife can therefore be sharpened without having to adjust for changes in its axial dimension and without changing the tolerances.

By definition herein, the axial surface is a surface facing either upstream or downstream in the axial direction.

By the term "configured to be grinded" is herein meant that the intermediate surface is located relative to the sharpened edge such that grinding of the intermediate surface makes the sharpened edge sharper.

The intermediate surface is a surface of each blade which extends transversely to the axial surface. The angle between the intermediate surface and the axial surface could e.g. be 10-50 degrees, e.g. 10-40 or 10-20 degrees. In one embodiment, the intermediate surface is in front of the other surfaces when the knife rotates, i.e. in the direction of the movement of the blades when the knife rotates.

The device may particularly be a meat grinder, and particularly a powered grinder for industrial purpose, i.e. configured for very high throughput and made of high tensile steel or similar strong and durable materials.

The device may particularly be configured for assembly and disassembly, particularly such that the device forms a grinding train of components which facilitate the grinding and which are arranged one after the other in the flow passage. The components forming the grinding train in the flow passage could particularly be assembled e.g. in a tool-free manner, by pushing one component into engagement with an adjacent component. In this way, the knife may particularly be held in place by interaction between the other components of the grinding train, and the interplay between the knife and the other components may determine the position of the knife. The knife may e.g. be squeezed between adjacent components or at least be prevented from moving axially in the flow path by the other components of the grinding train. In this embodiment the particular way of sharpening the sharpened edge by only grinding the intermediate surface facilitates the assembly by not influencing the axial dimension of the knife.

The flow passage may form an open end into which each component of the grinding train is pushed, either one by one for assembly inside the flow passage, or preassembled into one grinding train which is inserted into the flow passage. Subsequently, the flow passage could be closed by a lock-nut attached at the open end to prevent the grinding train from moving out of the flow passage. Again, due to the sharpening by grinding the intermediate surface of the blades, the axial dimension of the blade remains essentially unchanged, and the assembly procedure may be carried out without having to adjust for changing axial dimension.

The sharpened edge may particularly extend between the intermediate surface and that one of the axial surfaces which faces upstream in the direction of the rotation axis. In that way, the sharpened edge faces rearward in the flow direction.

The intermediate surface may be concave. By definition herein, the term concave means that the intermediate surface curves inwardly. When seen in the direction of the movement of the blades when the knife rotates that means that the edges where the intermediate surface joins the axial surfaces, the intermediate surface is ahead of the central portion between the edges.

Each blade may further form a rear surface, the rear surface joining the axial surfaces backwards in respect of the direction of the movement of the blades when the knife rotates, i.e. behind the intermediate surface.

In a cross section being transverse to a direction from the point of attachment to the tip portion, the blades may particularly form a square. In one embodiment, the cross section forms a rectangle where the intermediate surface and the rear surface have same length, or where the axial surfaces have the same length. The cross section may also form a quadrangle where all surfaces, i.e. the axial surfaces, the intermediate surface and the rear surface all have the same length.

The blades may form an additional sharpened edge extending between one of the axial surfaces and the rear surface.

The knife may be arranged against a hole-plate. Particularly against a hole-plate located downstream the knife. In this embodiment, the sharpened edge may particularly be between the downstream axial surface and the transverse face such that the sharpened edge is close to the hole-plate or directly against the hole-plate.

In an alternative embodiment, the flow path defines an unhindered passage between the knife and the outlet.

Herein, the term "unhindered passage" means that there is no hole-plate or similar flow restricting obstacles between the rotating knife and the outlet.

Due to the unhindered passage, the undesired objects are not defragmented to the extent known from existing machines operating with a hole-plate. Since the food is sliced by a knife without hindering passage of the food away from the knife, the food is cut into pieces which are large relative to the pieces obtained with a knife and hole-plate combination. This improves the ability to remove unwanted objects from the food after the slicing. Further, when there is no hole-plate, wear on the knife may be reduced. Further, the processing speed can be increased compared to the speed which can be achieved in a device which operates with a knife and hole-plate combination. This is inter alia due to the increased pressure against the surface of the hole-plate which restricts the processing speed.

The knife may be fixed between a downstream structure located downstream of the knife and an upstream structure located upstream of the knife.

The downstream structure may be ring shaped and form a tunnel for the substance of sliced meat lumps which can move though the hollow centre of the ring shaped structure. The downstream structure may be arranged in axial continuation of the knife in the downstream direction and it may form a ring shaped contact surface against the knife, i.e. a surface which is in contact with the knife. This contact may particularly be along a tip portion of the knife blades. Again, since the sharpened edge is sharpened by grinding the intermediate surface of the blades, the axial dimension of the blade remains essentially unchanged, and the interaction with the downstream or upstream structure does not change by the sharpening procedure.

The downstream structure may provide an easy way of assembling and disassembling the grinder, and due to the hollow centre, the flow path provides unhindered passage compared to the traditional knife and hole-plate combination.

In one embodiment, the knife moves relative to the mentioned ring shaped contact surface of the downstream structure and this may cause wear on the points of contact between the knife and the contact surface. Accordingly, the downstream structure and/or the knife may comprise a friction reducing surface and/or a wear resisting surface at the points of contact. This may be provided as a coating layer of a hard and/or low frictional material. Particularly, the knife may comprise a friction reducing surface, e.g. a surface coating, e.g. a coating of Teflon or similar low friction material. Since the sharpened edge is sharpened by grinding the intermediate surface of the blades, the axial surfaces may remain essentially un-amended and the coating or specific surface characteristics of such surfaces may remains essentially unchanged by the sharpening procedure.

The knife may comprise a knife-ring arranged circumferentially about the knife and it may have a larger dimension than the blades in the axial direction. The knife-ring may be formed in one part with the blades, or the knife-ring may be releasably fixed to the blades, e.g. by screws etc. The release of the knife-ring from the blades may facilitate an easier access to grind the intermediate surface

In one embodiment, the downstream structure moves with the knife. In one example, the knife is rotatable and the downstream structure is joined to rotate with the knife.

In one embodiment, the downstream structure has the same radial dimension as the knife-ring.

In one embodiment, the contact surface of the downstream structure is in contact with the knife-ring.

In one embodiment, the knife-ring has a larger axial dimension as the blades and the knife-ring constitutes the downstream structure, i.e. there is not separate ring downstream of the knife but only the knife-ring which is joined with the blades.

In one embodiment, each blade is releasably attached to the hub.

The feeding structure may comprise a first feeder arranged upstream the knife, e.g. an auger feeder.

The device may comprise a pre-grinder knife arranged in the flow passage upstream the knife, e.g. between the feeder and the knife. The pre-grinder knife facilitates a pre-processing of the food where larger food lumps are cut into smaller lumps before reaching the knife.

The pre-grinder, when provided, may be arranged at a distance from the knife such that the knife and pre-grinder does not move against each other. That reduces wear on the knife and pre-grinder.

The aforementioned upstream structure could be constituted by the pre-grinder or by a distance ring located between the pre-grinder and the knife. The upstream structure may particularly be located between the pre-grinder knife and the knife such that it separates the pre-grinder and the knife. I one embodiment, the upstream structure has a ring shape with an open centre through which the pre-grinded meat can move. The upstream structure may be in contact with at least one of the pre-grinder knife and the knife, e.g. a tip portion of the rotating blades. The upstream structure may be formed in one piece with the pre-grinder knife such that the pre-grinder knife has a circumferential portion with a larger dimension in the axial direction than the remaining parts of the pre-grinder.

The knife may include an integral circumferential rim. This rim may have a larger dimension in the axial direction than the blades of the knife. This corresponds essentially to the integration of a distance ring formed in one piece with the knife. Herein we refer to such an integrated distance ring as a "knife-ring". the knife-ring has the advantage that assembly, disassembly, cleaning, and maintenance may become less complicated by the reduced number of elements in the meat grinder. The knife-ring could be releasably attached to the blades.

In a second aspect, the disclosure provides a knife set for arrangement in a flow passage of a food processing device, the knife set comprising distance ring and a knife, wherein the knife comprises a hub and a plurality of blades, the hub being configured for rotation about a rotation axis which extends in the axial direction, and each blade extending radially from a point of attachment at the hub to a tip portion terminating the blade, wherein each blade forms a sharpened edge, wherein the sharpened edge extends between an axial surface and an intermediate surface, wherein the axial surface faces upstream or downstream in the direction of the rotation axis and the intermediate surface extends transversely to the axial surface, and wherein the intermediate surface is configured to be grinded to sharpen the sharpened edge.

The knife according to the second aspect may include any of the elements mentioned for the knife in the device according to the first aspect.

In a third aspect, the disclosure provides a method of sharpening a knife for a food processing device, the knife comprising a hub and plurality of blades, the hub being configured for rotational suspension in an intended direction of rotation about a rotation, and each blade extending from an attachment portion at the hub to a tip portion, each blade forming a sharpened edge extending between an axial surface and an intermediate surface, the axial surface facing the direction of the rotation axis and the intermediate surface facing a direction which is transverse to the axial surface when the knife rotates in the intended direction of rotation, wherein the method comprises the step of grinding the intermediate surface of each blade to thereby sharpen the sharpened edge.

The intermediate surface may particularly be grinded from the tip portion towards the attachment portion.

The knife may be fixed by grippers gripping two opposite axial surfaces while the intermediate surface is grinded.

The axial faces may particularly not be grinded such that the sharpening of the sharpened edge essentially leaves the axial surfaces unchanged.

The knife may be attached in the flow passage of the food processing device between a downstream structure located downstream of the knife and an upstream structure located upstream of the knife, the downstream structure forming a ring shaped contact surface against the knife and forming a tunnel for food in the flow passage.

The downstream structure may be fixed to the blades such that it forms an integral part of the knife.

### LIST OF DRAWINGS

Fig. 1 illustrates a perspective view of a meat grinder in a cross-section along the axial direction;
Fig. 2 illustrates an exploded view of the meat grinder;
Fig. 3 illustrates a cross section, side view;
Fig. 4 illustrates a knife set for the flow passage; and
Fig. 5 illustrates the knife in a perspective view;
Figs. 6 and 7 illustrate an alternative embodiment of the knife,
Fig. 8 illustrates a side view of the knife illustrated in Figs. 6 and 7,
Fig. 9 illustrates a cross-section of a blade, and
Fig. 10 illustrates an alternative view of the knife according to the disclosure.

### DETAILED DESCRIPTION OF EMBODIMENTS

The device of this disclosure could be for processing any kind of food object. Particularly, however, it may be advantageous for processing meat.

In the following, an embodiment of a meat grinder 1 configured for high volume processing of meat in a meat processing plant is described as an example of such a device for processing food objects.

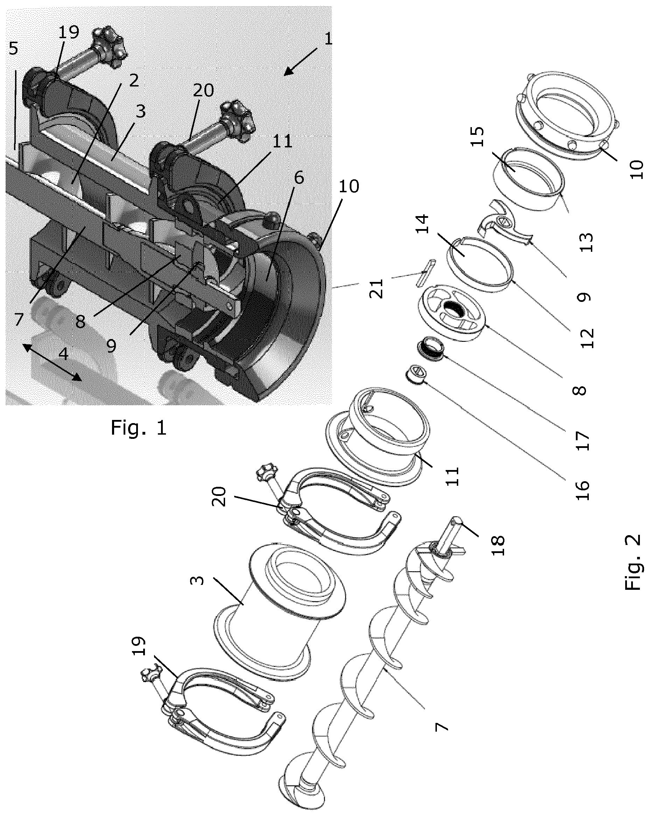

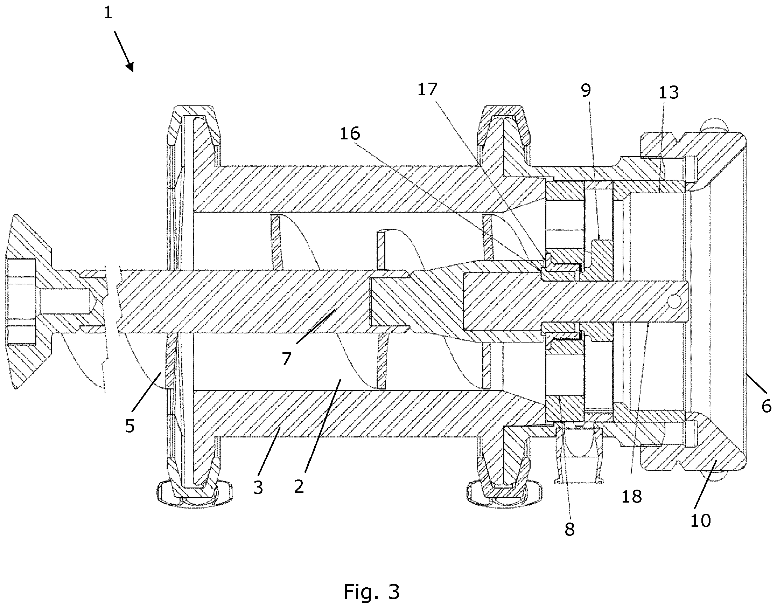

Fig. 1 illustrates a perspective, cross sectional view, Fig. 2 illustrates an exploded view, and Fig. 3 illustrates a cross section, side view. In Figs. 1, 2 and 3, the same numbers apply for the same features of the meat grinder.

The meat grinder comprises a flow passage 2 formed by the casing 3 which extends in an axial direction, as indicated by the arrow 4. The casing extends from an inlet 5 where lumps of meat enter the meat grinder, to an outlet 6, where the grinded meat is ejected from the grinder.

A screw feeder or auger 7 is arranged in the flow passage and feeds meat in the axial direction through the passage. The screw feeder is driven by an electrical motor which is not illustrated in the drawings.

The screw feeder holds a pre-grinder 8 and a knife 9, herein, we refer to the screw feeder, pre-grinder, and knife as the "grinder train". The grinder train is fixed in the flow passage by the lock nut 10 which is attached by screw threads to the casing 3 via the flange 11. The flange allows adaptation of different length of the grinder train.

The grinder train includes two distance rings 12, 13 forming upstream and downstream structures. A first of the two distance rings 12, the upstream structure, is arranged between the pre-grinder and the knife and provides a clearance on the upstream side of the knife towards the feeder. A second of the two distance rings 13, the downstream structure, is arranged between the knife and the lock nut 10 and provides a clearance on the downstream side of the knife towards the outflow. Each of the two distance rings forms an internal flow passages 14, 15 for flow of meat though the distance ring.

The meat grinder further includes a D-Nut 16 and a bearing 17 configured for carrying the pre-grinder and driving the knife at the end of the screw feeder by engagement with the screw feeder tip 18. The meat grinder further includes coupling rings 19, 20 which, at the inlet, connects the meat grinder to a power and meat supply, and which in the opposite end connects the flange 9 to the casing.

The spline 21 prevents rotation of the first distance ring 12 and the pre-grinder 8 by engagement with grooves in the first distance ring 12, the pre-grinder 8, and the flange 11.

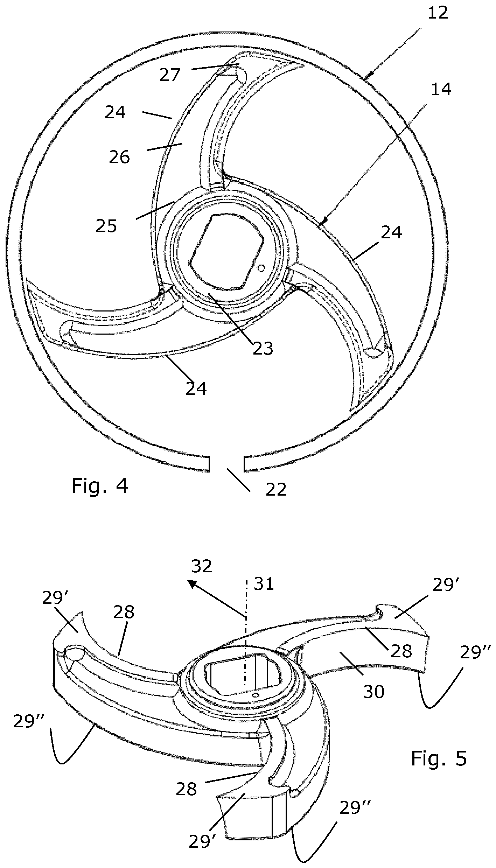

Fig. 4 illustrates a knife set for the flow passage. The knife set comprises the knife 9 and the distance ring 12.

In this view, the notch 22 for engagement with the spline 21 is clearly shown. The notch and spline engagement prevents rotation of the distance ring.

The knife comprises a hub 23 and three blades 24. The hub is configured for rotation about a rotation axis and each blade extending radially from an attachment portion 25 of the blades, i.e. where the blade is attached to the hub via central portion 26 to a tip portion 27 which terminates the blade radially outwardly.

As illustrated in Fig. 5, each blade forms a sharpened edge 28 extending between an axial surface 29' and an intermediate surface 30. The axial surface 29' faces in the direction of the rotation axis and the intermediate surface extends transversely to the axial surface. In the illustrated embodiment, that direction is nearly perpendicular to the axial direction and the radial direction. The rotation axis is indicated by the dotted line 31, and the radial direction is indicated by the arrow 32.

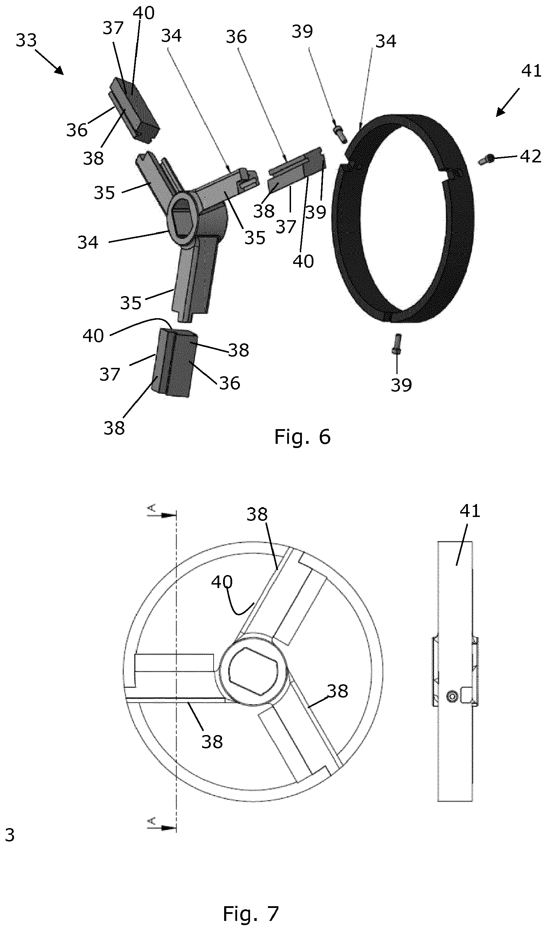

Figs. 6 and 7 illustrate an alternative embodiment of the knife. In this embodiment, the knife 33 comprises a hub 34 with integrated blades 35 extending radially from the hub. Each blade has a mounting fixture for attachment of separate cutting elements 36. Each cutting element forms a sharpened edge. 37.

Each blade forms a downstream axial surface 38, an upstream axial surface 39, and an intermediate surface 40.

The distance ring 41 is fixed to the blades by the screws 41 and rotates with the knife. Accordingly, the distance ring becomes integrated in the knife and forms a knife-ring which rotates with the blades. The knife-ring may e.g. be in contact with those elements being adjacent to the knife. The distance ring could be made from a low friction material, e.g. brass.

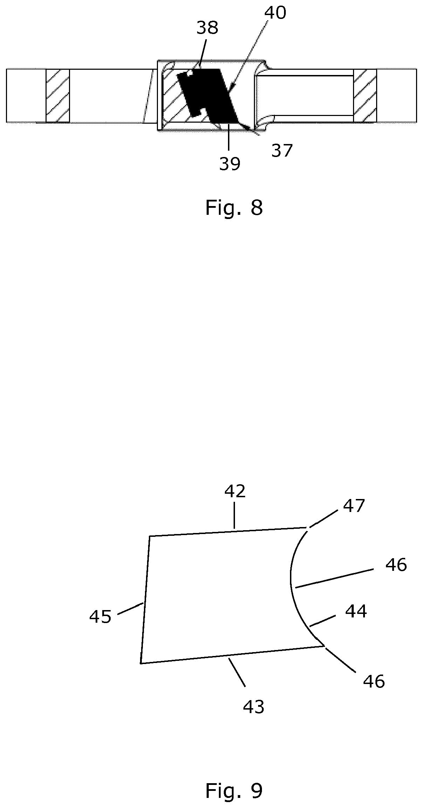

Fig. 8 illustrates a side view of the knife shown in Figs. 6 and 7. The downstream axial surface 38, the upstream axial surface 39, and an intermediate surface 40 are clearly seen. The sharpened edge 37 can be sharpened by grinding of the intermediate surface 40.

Fig. 9 illustrates a cross section of the blade. The illustrated cross section is transverse to a direction from the point of attachment to the tip portion.

The cross section is square and illustrates the four surfaces, i.e. the downstream axial surface 42, the upstream axial surface 43, the intermediate surface 44 and the rearward surface 45. The intermediate surface 44 is a grinded surface thereby providing sharpening of the edge 46 between the intermediate surface 44 and the upstream axial surface 43.

The illustration of Fig. 8 clearly shows that the intermediate surface is concave. The intermediate surface curves inwardly.

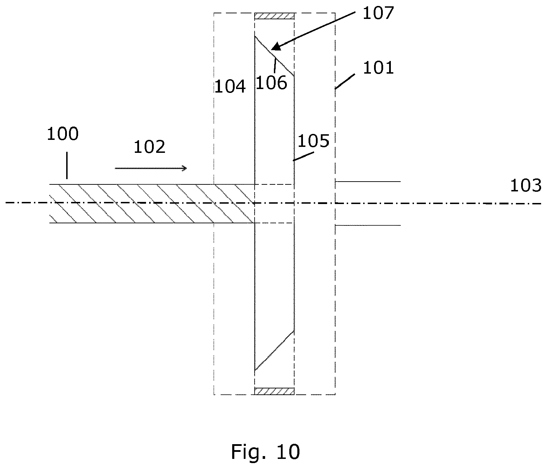

Fig. 10 illustrates a drive shaft 100 and a knife 101. The food objects are conveyed in the downstream direction indicated by the arrow 102 and the knife rotates about the axis 103. The knife comprises blades each having an upstream axial surface 104 and a downstream axial surface 105. The intermediate surface 106 extends between the upstream axial surface 104 and a downstream axial surface 105 and defines the sharpened edge 107. The sharpened edge is maintained and sharpened by grinding the intermediate surface 106 without grinding the upstream axial surface 104 and a downstream axial surface 105.

## Claims

1. A food processing device (1) comprising a flow passage (2) extending in an axial direction (4) from an inlet (5) to an outlet (6), a feeder (7) arranged in the flow passage and configured to transport food downstream in the axial direction through the passage , a knife (9) arranged in the passage between the outlet and the feeder and configured to cut food in the flow passage, the knife comprising a hub (23, 34) and a plurality of blades (24, 35) extending from the hub, the hub being suspended for rotation about a rotation axis which extends in the axial direction, each blade forming an upstream axial surface (29', 39, 43) facing upstream in the axial direction, a downstream axial surface (29", 38, 42) facing downstream in the axial direction, and an intermediate surface (30, 40, 46) extending between the upstream axial surface and the downstream axial surface, where the intermediate surface forms a sharpened edge (28, 37, 46), and where the sharpened edge is configured to be sharpened by grinding of the intermediate surface.

2. A food processing device according to claim 1, wherein the upstream axial surface (29', 39, 43) has a larger diameter than the downstream axial surface (29", 38, 42) and the intermediate surface forms an inclined surface between the larger and smaller diameter.

3. The food processing device according to claim 1 or 2, wherein the intermediate surface (30, 40, 46) is concave.

4. The food processing device according to any of the preceding claims, wherein each blade further forms a rear surface (45), the rear surface joining the upstream axial surface (29', 39, 43) and the downstream axial surface (29", 38, 42).

5. The food processing device according to any of the preceding claims, wherein the flow path defines an unhindered passage between the knife and the outlet.

6. The food processing device according to any of the preceding claims, wherein the knife is fixed between a downstream structure located downstream of the knife and an upstream structure located upstream of the knife, the downstream structure forming a ring shaped contact surface against the knife and forming a tunnel for the food.

7. The food processing device according to any of the preceding claims, wherein the knife comprises a knife-ring extending circumferentially about the hub and blades.

8. The food processing device according to claim 7, wherein the knife-ring is releasably attached to the blades.

9. The food processing device according to any of the preceding claims, where at least a part of each blade is releasably attached to the hub.

10. The food processing device according to any of the preceding claims, wherein the feeding structure comprises a first feeder (7) arranged upstream the knife.

11. The food processing device according to any of the preceding claims, further comprising a pre-grinder knife arranged upstream the knife.

12. A knife set for arrangement in a flow passage of a food processing device, the knife set comprising knife-ring (12) and a knife (9), wherein the knife comprises a hub (23) and a plurality of blades (24), the hub being configured for rotation about a rotation axis which extends in an axial direction, and each blade extending radially from a point of attachment at the hub to a tip portion (27) terminating the blade, wherein each blade forms an upstream axial surface and a downstream axial surface, the upstream axial surface and downstream axial surface facing oppositely in the axial direction, and wherein each blade forms an intermediate surface extending between the upstream axial surface and the downstream axial surface, where the intermediate surface forms a sharpened edge, and where the sharpened edge is configured to be sharpened by grinding of the intermediate surface.

13. A knife set according to claim 12, wherein the knife-ring (12) is releasably attached to the blades.

14. A method of sharpening a knife for a food processing device, the knife comprising a hub and plurality of blades, the hub being configured for rotational suspension in an intended direction of rotation about a rotation axis, and each blade extending from an attachment portion at the hub to a tip portion, each blade forming a sharpened edge extending between an axial surface and an intermediate surface, the axial surface facing the direction of the rotation axis and the intermediate surface extending transversely to the axial surface, wherein the method comprises the step of grinding the intermediate surface of each blade to thereby sharpen the sharpened edge.

15. The method according to claim 14, wherein the intermediate surface is grinded from the tip portion towards the attachment portion.

16. The method according to claim 14 or 15, wherein the knife is fixed by grippers gripping two opposite axial surfaces.

17. The method according to any of claims 14-16, comprising the step of removing the knife from the food processing device3 before sharpening the sharpened edge.

18. The method according to any of claims 14-17, wherein the upstream axial face and the downstream axial face are not grinded.

19. The method according to any of claim 14-18, wherein the knife is attached in the flow passage of the food processing device between a downstream structure located downstream of the knife and an upstream structure located upstream of the knife, the downstream structure forming a ring shaped contact surface against the knife and forming a tunnel for food in the flow passage.

20. The method of claim 19, wherein the downstream structure is fixed to the blades and forms a knife-ring.
